(19) **Europäisches Patentamt**
European Patent Office
Office européen des brevets

(11) **EP 2 006 183 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(51) Int Cl.:
*B60W 50/02* (2006.01)     *B60W 30/18* (2006.01)
*F02D 41/22* (2006.01)     *B60W 10/06* (2006.01)

(21) Anmeldenummer: **08010237.9**

(22) Anmeldetag: **05.06.2008**

(54) **Bestimmung eines Motormomentfehlers während eines Motormomenteneingriffs**

Determination of a motor momentum error during a motor momentum intervention

Détermination d'une erreur de couple moteur pendant une intervention sur le couple moteur

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.06.2007 DE 102007027904**

(43) Veröffentlichungstag der Anmeldung:
**24.12.2008 Patentblatt 2008/52**

(73) Patentinhaber: **Schaeffler Technologies GmbH & Co. KG**
**91074 Herzogenaurach (DE)**

(72) Erfinder:
- **Preisner, Marian**
  **77815 Bühl (DE)**
- **Benz, Jürgen**
  **77704 Oberkirch (DE)**

(56) Entgegenhaltungen:
**DE-A1- 4 118 736**

**Beschreibung**

Die vorliegende Erfindung befasst sich mit einem Verfahren zur Bestimmung des Fehlers eines Motormoments nach dem Oberbegriff des ersten unabhängigen Anspruchs 1.

Die in der DE 41 18 736 A1 offenbarte Erfindung bezieht sich auf eine Steuervorrichtung, welche sowohl das Arbeiten der Brennkraftmaschine als auch des Getriebes steuert, und insbesondere bezieht sich die Erfindung auf eine solche Steuervorrichtung, die eine Fehlfunktionsdetektionseinrichtung umfasst, welche die Detektion einer unzweckmäßigen Drehmomentverminderungssteuerung erkennt.

In der Fahrzeugtechnik sind Verfahren zur Referenzierung und/oder zur Überprüfung der Kupplungsposition bekannt, bei der die Drehzahl und das Motormomentes des Antriebsmotors verwendet werden, um das übertragende Kupplungsmoment abzuschätzen und somit die Position der Kupplung feststellen zu können. Dabei wird angenommen, dass das Motormoment fehlerfrei gesteuert bzw. gemessen werden kann. Dadurch kann einfach das übertragene Kupplungsmoment ermittelt werden und so die Position der Kupplung entsprechend angepasst werden.

Wird jedoch das Drehmoment des Antriebsmotors mit einem Fehler behaftet gesteuert und/oder fehlerhaft ermittelt, so wird das Kupplungsmoment, da das Antriebmotormoment als fehlerfrei gilt, entsprechend korrigiert. Dies kann unter Umständen gewünscht sein, wenn der Fehler des Motormoments gleichmäßig und nicht vereinzelt auftritt, da dieser Fehler dann von der Kupplungssteuerung ausgeglichen wird.

Tritt diese Fehler jedoch nur vereinzelt auf, z. B. nur in besonderen Situationen, so kann die Kupplung falsch positioniert werden, sodass dieser Fehler erkannt werden sollte.

Die Aufgabe der Erfindung ist es, ein Verfahren bereit zu stellen, das es erlaubt einen Fehler bei der Steuerung und oder Erkennung des Motordrehmomentes zu erfassen.

Gelöst wird diese Aufgabe durch das Verfahren nach dem Anspruch 1. Bevorzugte Ausführungsformen finden sich in den Unteransprüchen.

Zur Lösung der vorstehend geschilderten Aufgabe sieht die Erfindung nun ein Verfahren zu Bestimmung des Fehlers eines Motormoments vor, wobei zumindest vor und nach einer vorbestimmten Veränderung des Motormoments die Änderung der Motordrehzahl erfasst wird und diese mit dem ermittelten Motormoment vor und nach der Motormomentänderung verglichen wird.

Die Drehzahl des Motors steht in der Regel den einzelnen Steuer- und Messeinheiten während des Betriebs des Fahrzeuges zu Verfügung, so dass die Veränderung Motordrehzahl in einer einfachen Weise zur Bestimmung des Motormomentes herangezogen werden kann.

Das ermittelte Motormoment kann z.B. aus der Motorsteuerung entnommen werden. Das ermittelte Motormoment kann dabei auch aus verschiedenen Motorkennzahlen berechnet und oder abgeschätzt werden.

Beim Vergleich der Motordrehzahl mit dem Motormoment kann sowohl die Motordrehzahl als auch das Motormoment noch mit weiteren Faktoren verrechnet werden, sodass ein einfacher Vergleich möglich wird. Jedoch ist es auch möglich über Look-up Tabellen oder Beobachter direkt die Motordrehzahl mit dem Motormoment zu vergleichen.

In einer besonderen Ausführungsform wird die Änderung der Motordrehzahl jeweils mit der Motorträgheit multipliziert.

Die Motorträgheit ist dabei das Motorträgheitsmoment, das aufgrund der Geometrie und der Massenverteilung des Motors einer Drehzahländerung entgegenwirkt.

Die Multiplikation der Änderung der Motordrehzahl nach der Zeit multipliziert mit der Motorträgheit ergibt damit das vom Motor aufgebrachte Drehmoment abzüglich des von der Kupplung übertragenen Drehmoments.

In einer weiteren bevorzugen Ausführungsform wird dem Motormoment vor und nach der vorbestimmten Änderung jeweils das übertragene Kupplungsmoment abgezogen.

Setzt man nun an, dass sich eine Änderung der Motordrehzahl ergibt, wenn das vom Motor aufgebrachte Drehmoment sich vom Kupplungsmoment unterscheidet, so ergibt sich:

$$(J_{Eng}\dot{\omega}_{Eng})_{before} - (J_{Eng}\dot{\omega}_{Eng})_{after} = (T_{Eng,before} + T_{Eng,Error,before}) - (T_{Cl,before} + T_{Cl,Error,before}) -$$
$$((T_{Eng,after} + T_{Eng,Error,after}) - (T_{Cl,after} + T_{Cl,Error,after})) \qquad .$$

mit

$J_{Eng}$ = Trägheitsmoment des Motors

$\dot{\omega}E_{ng}$ = Beschleunigung der Motordrehzahl

$T_{Eng}$ = Motormoment von der Motorsteuerung

$T_{cl}$ = Kupplungsmoment aus der Kennlinie

$T_{Eng,error}$= Fehler des Motormoments

$T_{Cl,error}$ = Fehler des Kupplungsmomentes

Abgesehen von den gesuchten Größen $T_{Eng,error,before}$ und $T_{Eng,error,after}$ sind $T_{Cl,error,before}$ und $T_{Cl,error,after}$ die einzigen unbekannten Größen in der obigen Formel. Verändert sich jedoch das Kupplungsmoment in dem betrachteten Zeitraum vor und nach dem Motormomenteingriff nur geringfügig verglichen mit der Änderung des Motormoment im gleichen Zeitraum, ist die Änderung des Kupplungsmomentes verschwindend klein. Dann können die Größen $T_{cl,error,before}$ und $T_{cl,error,after}$ in der obigen Formel eliminiert werden. Die Differenz zwischen $T_{eng,error,before}$ und $T_{eng,error,after}$ stellt dann den gesuchten Motorfehler dar.

$$T_{Eng,error} = T_{Eng,error,before} - T_{Eng,error,after}$$
$$= (J_{Eng}\dot{\omega}_{Eng})_{before} - T_{Eng,before} + T_{Cl,before} - ((J_{Eng}\dot{\omega}_{Eng})_{after} - T_{Eng,after} + T_{Cl,after}$$

Die so bestimmte Differenz des Motormomentfehlers kann dann bei der Berechnung des Kupplungsmomentsfehlers berücksichtigt werden.

Insbesondere kann die vorbestimmte Änderung des Motormoments durch eine Steuereinheit gesteuert werden. Ein solcher Eingriff in das Motordrehmoment wird dabei bevorzugt durch die Motorsteuerung vorgenommen und in einer besonders bevorzugten Ausführungsform durch die Kupplungssteuerung veranlasst. Dabei kann die Motorsteuerung und die Kupplungssteuerung auch ein Mittel sein.

Bevorzugt werden die Kupplungs- und/oder die Motormomente über eine Zeitspanne gemittelt. Dadurch kann ein Messwertrauschen vermieden werden. Ebenso können die Drehzahländerungen, die am Motor gemessen werden, gemittelt werden. Durch die Mittelungen wird insgesamt auch vermieden, dass einmalige Messfehler eine zu große Auswirkung auf die Motormomentenfehlerermittlung haben.

Weiter kann das Verfahren auch so ausgestaltet werden, dass die Momentenfehlerermittlung nur bei einem Momenteneingriff vorgenommen wird, der eine bestimmte Größe aufweist.

Im Weiteren wird die Erfindung anhand eines Ausführungsbeispiels mit Hilfe der Zeichnungen näher erklärt, ohne dass dies eine Einschränkung des Schutzbereichs darstellt.

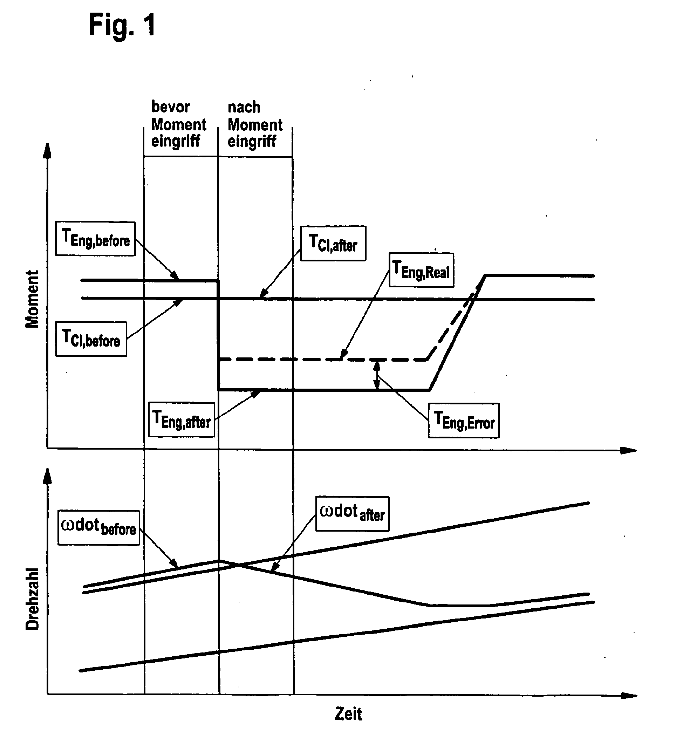

Fig. 1 zeigt eine Darstellung des Drehmoments bzw. der Motordrehzahl während des Momenteneingriffs über der Zeit.

Bei einem Momenteneingriff wird das Drehmoment des Antriebmotors verändert. In Fig. 1 wird dieses Drehmoment verringert von $T_{eng,before}$ auf $T_{eng,after}$. Dabei ist zwischen dem gewollten Drehmoment $T_{eng,after}$ und dem realen Drehmoment $T_{eng,real}$ ein Fehler $T_{eng,errpor}$. Während diesem Momenteneingriff ändert sich das Moment der Kupplung $T_{Cl,before}$ kaum.

Fig. 1 zeigt im Weiteren die Abhängigkeit der Veränderung der Motordrehzahl von dem Motormoment bei gleich bleibendem übertragenem Kupplungsmoment.

Während des Momenteneingriffs ändert sich auch die Steigung der Motordrehzahl über der Zeit. Durch die Abnahme des Motormoments nimmt auch die Motordrehzahl mit der Zeit ab.

Um den Motormomentenfehler bei einem Motormomenteneingriff zu bestimmen wird in einer ersten Phase eine Vielzahl von Motormomenten und Kupplungsmomenten ermittelt. So werden die Motormomente von der Motorsteuerung erhalten, während die Kupplungsmomente aus einer Kennlinie von der Position des Kupplungsaktors erhalten werden. Wird nun ein Motormomenteneingriff durch die Motorsteuerung vorgenommen so werden diese ermittelten Kupplungsmomente und Motormomente gemittelt um einen verlässlichen Wert für die verschiedenen Momente zu erhalten. Dazu ist es gewünscht, dass die vor dem Motormomenteneingriff ermittelten Werte möglichst zeitnah zum Motormomenteneingriff erfasst worden sind.

Wird nun der Motormomenteneingriff von der Motorsteuerung vorgenommen oder von einem Sensor erkannt und übersteigt das geänderte Motormoment einen bestimmten Schwellwert , so wird nach dem Motormomenteneingriff ein zweiter Satz Messwerte aufgenommen, die das von der Kupplung übertragbare Moment bzw. das vom Motor aufgebrachte Moment widerspiegeln.

Parallel zur Ermittlung und Speicherung der Momente wird die Veränderung der Motordrehzahl erfasst. Auch diese werden entsprechend gemittelt um das Messwertrauschen zu verkleinern.

Nun können aus diesen Werten bei bekannter Motorträgheit der Motormomentenfehler errechnet werden und bei der Berechnung des Kupplungsmomentenfehlers berücksichtigt werden.

**Patentansprüche**

1. Verfahren zur Bestimmung des Fehlers eines Motormoments, **dadurch gekennzeichnet, dass** zumindest vor und nach einer vorbestimmten Veränderung des Motormoments die Änderung der Motordrehzahl erfasst wird, und diese mit dem Motormoment vor und nach der Motormomentänderung verglichen wird.

2. Verfahren nach dem vorhergehenden Anspruch und **dadurch gekennzeichnet, dass** die Änderung der Motordrehzahl jeweils mit der Motorträgheit multipliziert wird.

3. Verfahren nach den vorhergehenden Ansprüchen, **dadurch gekennzeichnet, dass** von dem Motormoment vor und nach der vorbestimmten Veränderung jeweils das übertragene Motorkupplungsmoment abgezogen wird.

4. Verfahren nach einem der vorhergehenden Ansprüche, **dadurch gekennzeichnet, dass** die vorbestimmte Änderung des Motormoments durch eine Steuereinheit gesteuert wird.

5. Verfahren nach dem vorhergehenden Anspruch, **dadurch gekennzeichnet, dass** die vorbestimmte Änderung des Motormoments durch eine Kupplungssteuerung veranlasst wird.

6. Verfahren nach einem der vorhergehenden Ansprüche, **dadurch gekennzeichnet, dass** die Werte für die Motormomente und oder die Werte für die Kupplungsmomente vor und nach der vorbestimmte Änderung des Motormomentes jeweils für mehrere Werte gemittelt werden.

7. Verfahren nach einem der vorhergehenden Ansprüche, **dadurch gekennzeichnet, dass** das Verfahren durchgeführt wird, wenn die vorbestimmte Änderung des Motormomentes einen bestimmten Schwellwert übersteigt.

**Claims**

1. Method for determining the error in an engine torque, **characterized in that** at least before and after a predetermined change in the engine torque, the change in the engine rotational speed is measured, and this is compared with the engine torque before and after the engine torque change.

2. Method according to the preceding claim and **characterized in that** the change in the engine rotational speed is in each case multiplied by the engine inertia.

3. Method according to the preceding claims, **characterized in that** the transmitted engine clutch torque is subtracted in each case from the engine torque before and after the predetermined change.

4. Method according to one of the preceding claims, **characterized in that** the predetermined change in the engine torque is controlled by a control unit.

5. Method according to the preceding claim, **characterized in that** the predetermined change in the engine torque is triggered by a clutch controller.

6. Method according to one of the preceding claims, **characterized in that** the values for the engine torques and/or the values for the clutch torques before and after the predetermined change in the engine torque are averaged in each case for a plurality of values.

7. Method according to one of the preceding claims, **characterized in that** the method is carried out when the predetermined change in the engine torque exceeds a certain threshold value.

**Revendications**

1. Procédé de détermination d'une erreur sur le couple d'un moteur, **caractérisé en ce que** au moins avant et après une modification prédéterminée du couple du moteur, la variation de la vitesse de rotation du moteur est détectée et est comparée au couple du moteur avant et après la modification du couple du moteur.

2. Procédé selon la revendication précédente, **caractérisé en ce que** la modification de la vitesse de rotation du moteur est multipliée par l'inertie du moteur.

3. Procédé selon les revendications précédentes, **caractérisé en ce que** le couple transmis par l'accouplement du moteur est déduit du couple du moteur avant et après la modification prédéterminée.

4. Procédé selon l'une des revendications précédentes, **caractérisé en ce que** la modification prédéterminée du couple du moteur est commandée par une unité de commande.

5. Procédé selon la revendication précédente, **caractérisé en ce que** la modification prédéterminée du couple du moteur est lancée par une commande de l'accouplement.

6. Procédé selon l'une des revendications précédentes, **caractérisé en ce que** la moyenne des valeurs du couple du moteur ou des valeurs du couple de l'accouplement sont calculées sur plusieurs valeurs avant et après la modification prédéterminée du couple du moteur.

7. Procédé selon l'une des revendications précédentes, **caractérisé en que** le procédé est exécuté lorsque la modification prédéterminée du couple du moteur dépasse une valeur de seuil prédéterminée.

# Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4118736 A1